# EUROPÄISCHE PATENTANMELDUNG

(11) **EP 3 907 530 A1**
(43) Veröffentlichungstag der Anmeldung: **10.11.2021**
(21) Anmeldenummer: 21161670.1
(22) Anmeldetag: 10.03.2021
(51) Int. Cl.: G01S 17/00, G01S 17/88, G08C 23/04

(54) **SENSORANORDNUNG**

(30) Priorität: 06.05.2020 DE 202020102537 U
(71) Anmelder: Leuze electronic GmbH + Co. KG, 73277 Owen/Teck (DE)
(72) Erfinder: Tkach, Gennady, 81373 München (DE); Koperski, Joachim, 85521 Ottobrunn (DE)
(74) Vertreter: Ruckh, Rainer Gerhard

(57) **Zusammenfassung**

Die Erfindung betrifft eine Sensoranordnung mit einem Sensor (1), welcher zur Erfassung von Objekten (8) in einem Erfassungsbereich ausgebildet ist, wobei der Sensor (1) ein Anzeigemittel mit wenigstens einer Leuchtdiode (9) aufweist. Die Leuchtdiode (9) bildet eine unidirektionale Schnittstelle aus, in dem diese moduliertes Licht (13) aussendet. Weiterhin ist eine externe Einheit mit einer Empfangseinheit und einer zugeordneten Auswerteeinheit (12) vorgesehen. Die Empfangseinheit ist ausgebildet, das modulierte Licht (13) der Leuchtdiode (9) zu empfangen und die Auswerteeinheit (12) ist ausgebildet, das mit der Kamera (11) empfangene modulierte Licht (13) auszuwerten.

## Beschreibung

### Die Erfindung betrifft eine Sensoranordnung.

Die Sensoranordnung weist generell einen Sensor auf, mittels dessen eine Objekterfassung innerhalb eines Erfassungsbereichs durchgeführt wird. Der Sensor kann zu Überwachungszwecken eingesetzt werden. In diesem Fall generiert der Sensor Objektfeststellungssignale, die angeben, ob im Objekt eine Empfangseinheit vorhanden ist oder nicht. Weiterhin kann der Sensor zur Objektidentifikation eingesetzt werden. Insbesondere kann der Sensor als Codeleser ausgebildet sein.

Derartige Sensoren weisen generell Schnittstellen auf, über welche der Sensor Informationen, insbesondere in diesem generierte Sensorsignale ausgeben kann.

Neben leitungsgebundenen Schnittstellen können insbesondere auch berührungslos arbeitende Schnittstellen vorgesehen sein. Derartige berührungslose Schnittstellen können insbesondere als optische Schnittstellen ausgebildet sein, über welche bidirektional zwischen dem Sensor und einer externen Einheit eine Datenübertragung erfolgen kann. Derartige optische Datenübertragungen arbeiten mit Infrarot-Lichtquellen als Sender und entsprechend zugeordneten Infrarot-Empfängern. Über die so gebildeten optischen Übertragungsstrecken wird pulsmoduliertes Infrarot-Licht übertragen, wodurch eine kodierte Datenübertragung erfolgt. Üblicherweise wird als Kodierverfahren ein aus dem Bereich der IRDA-Schnittstellen stammendes Protokoll eingesetzt.

Nachteilig hierbei ist, dass zur Realisierung derartiger Schnittstellen ein erheblicher Hardwareaufwand erforderlich ist. Im Fall von IRDA-Schnittstellen kommt als wesentlicher Nachteil hinzu, dass die hierfür erforderliche Hardware nicht mehr serienmäßig hergestellt wird und auch von aktuellen Betriebssystemen nicht mehr unterstützt wird.

Der Erfindung liegt die Aufgabe zugrunde eine Sensoranordnung der eingangsgenannten Art bereitzustellen, bei welcher mit geringem Aufwand eine berührungslose Kommunikation eines Sensors mit einer externen Einheit ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit einem Sensor, welcher zur Erfassung von Objekten in einem Erfassungsbereich ausgebildet ist, wobei der Sensor ein Anzeigemittel mit wenigstens einer Leuchtdiode aufweist. Die Leuchtdiode bildet eine unidirektionale Schnittstelle aus, in dem diese moduliertes Licht aussendet. Weiterhin ist eine externe Einheit mit einer Empfangseinheit und einer zugeordneten Auswerteeinheit vorgesehen. Die Empfangseinheit ist ausgebildet, das modulierte Licht der Leuchtdiode zu empfangen und die Auswerteeinheit ist ausgebildet, das mit der Kamera empfangene modulierte Licht auszuwerten.

Der Grundgedanke der Erfindung besteht somit darin, Leuchtdioden eines Anzeigemittels nicht nur zum Zweck der Anzeige von sensorrelevanten Informationen zu nutzen, in dem die oder jede Leuchtdiode sichtbares Licht abstrahlt, das einem Benutzer die Informationen sichtbar anzeigt.

Erfindungsgemäß erfüllt die oder jede Leuchtdiode der Anzeigemittel eine Doppelfunktion derart, dass die Leuchtdiode zusätzlich moduliertes Licht abstrahlt, das zum Aufbau einer unidirektionalen Schnittstelle zu einer externen Einheit genutzt wird.

Mittels des modulierten Lichts können vom Sensor an die externe Einheit Daten übertragen werden. In der externen Einheit ist lediglich eine geeignete Empfangseinheit erforderlich, die das modulierte Licht empfängt. Weiterhin muss nur noch eine Auswerteeinheit vorgesehen sein, die das empfangene modulierte Licht auswertet. Für diese Auswertung muss keine spezielle Hardware vorgesehen sein, was an den Aufwand für die Auswertung entsprechend reduziert.

Gemäß einer vorteilhaften Ausführungsform ist als Empfangseinheit eine Kamera vorgesehen. Die Kamera kann generell als zeilen- oder matrixförmiger Bildsensor ausgebildet sein.

Gemäß einer besonders vorteilhaften Ausführungsform ist die externe Einheit von einem Smartphone gebildet.

In diesem Fall kann die im Smartphone integrierte Kamera als Empfangseinheit zum Empfangen des modulierten Lichts der Leuchtdiode der Anzeigemittel des Sensors genutzt werden. Die externe Einheit in Form des Smartphones bildet eine handelsübliche Einheit, wie ohne jegliche Hardware-Anpassung zur Kommunikation mit dem Sensor genutzt werden kann.

Besonders vorteilhaft ist die Auswerteeinheit von einer im Smartphone implementierten App gebildet.

Damit wird die Auswerteeinheit mit einem äußerst geringen Aufwand realisiert, da diese einfach durch Herunterladen der App im Smartphone installiert werden kann.

Im einfachsten Fall bestehen die Anzeigemittel des Sensors aus einer einzigen Leuchtdiode, mit der insbesondere eine Zustandsanzeige des Sensors ermöglicht wird, in dem mit der Leuchtdiode beispielsweise eine Statusanzeige realisiert wird. Beispielsweise kann durch Aktivieren der Leuchtdiode und der damit verbundenen Abstrahlung sichtbaren Lichts signalisiert werden, dass der Sensor fehlerhaft arbeitet.

Besonders vorteilhaft weist der Sensor als Anzeigemittel eine Leuchtdiodenanordnung mit mehreren Leuchtdioden auf.

Dabei emittiert die oder jede Leuchtdiode zur Anzeige von Informationen sichtbares Licht.

Die Leuchtdioden der Leuchtdiodenanordnung können dabei Licht mit gleicher Wellenlänge, das heißt gleicher Farbe abstrahlen. Alternativ können die Leuchtdioden Licht in unterschiedlichen Farben abstrahlen.

Mit den Leuchtdioden der Leuchtdiodenanordnung können detaillierte Zustandsanzeigen realisiert werden. Insbesondere können durch Aktivieren einzelner, mehrerer oder aller Leuchtdioden unterschiedliche Statusmeldungen realisiert werden. So können unterschiedliche Fehlermeldungen oder auch Warnmeldungen angezeigt werden.

Zur Realisierung der unidireaktionalen Schnittstelle ist dem sichtbaren Licht der oder jeder Leuchtdiode eine Modulation zur Informationsübertragung überlagert.

Dabei ist die Modulationsfrequenz der Modulation an die Reaktionszeit der Empfangseinheit angepasst.

Damit ist gewährleistet, dass die Empfangseinheit die Modulationen des ausgesandten Lichts vollständig erfassen kann. Dies ist insbesondere bei Empfangseinheiten in Form von Kameras, wie sie in Smartphones eingesetzt werden, von Bedeutung, da deren Reaktionszeiten relativ groß sind. Daher bieten sich zur Datenübertragung möglichst einfache Modulationsverfahren, zum Beispiel morseähnliche Modulationen an.

Weiter vorteilhaft sind die Modulationen des von den Leuchtdioden ausgestrahlten Lichts für das menschliche Auge nicht sichtbar, was eine entsprechend hohe Modulationsfrequenz voraussetzt. Insbesondere verursachen die Modulationen auch keine Helligkeitsschwankungen des ausgestrahlten Lichts, so dass die Anzeigefunktion der Leuchtdioden durch die Datenübertragung in keiner Weise beeinträchtigt ist.

Zur Auswertung der Modulationen des Lichts der Leuchtdiode ist in der Auswerteeinheit der externen Einheit eine Demodulation des in der Empfangseinheit empfangenden Modulierten Lichts durchführbar.

Generell können über die unidirektionale Schnittstelle Sensorsignale übertragbar sein.

Insbesondere können über die unidirektionale Schnittstelle Objektfeststellungssignale übertragbar sein.

Da bei einer Leuchtdiodenanordnung mit mehreren Leuchtdioden eine mehrkanalige Datenübertragung ermöglicht wird, kann diese auch durch gegenseitige Überprüfung der Kanäle sicherheitstechnischer Anforderungen genügen, so dass über die unidirektionale Schnittstelle auch sicherheitsrelevante Informationen übertragen werden können. Dies ist insbesondere dann vorteilhaft, wenn der Sensor ein Sicherheitssensor ist, der im Bereich der Sicherheitstechnik eingesetzt wird.

Der Sensor der Sensoranordnung kann in beliebigen Ausführungsformen ausgebildet sein.

Insbesondere ist der Sensor ein optischer Sensor, ein Ultraschallsensor oder ein Radarsensor.

Dabei kann der Sensor ein Distanzssensor, ein Codeleser, ein Lichttaster, ein Lichtvorhang, eine Lichtschranke oder eine Reflexionslichtschranke sein.

Die Erfindung wird im Folgenden anhand der Zeichnungen erläutert. Es zeigen:
- Figur 1: Schematische Darstellung eines Sensors.
- Figur 2: Schematische Darstellung eines Ausführungsbeispiels der erfin-dungsgemäßen Sensoranordnung mit dem Sensor gemäß Figur 1 und einer externen Einheit.

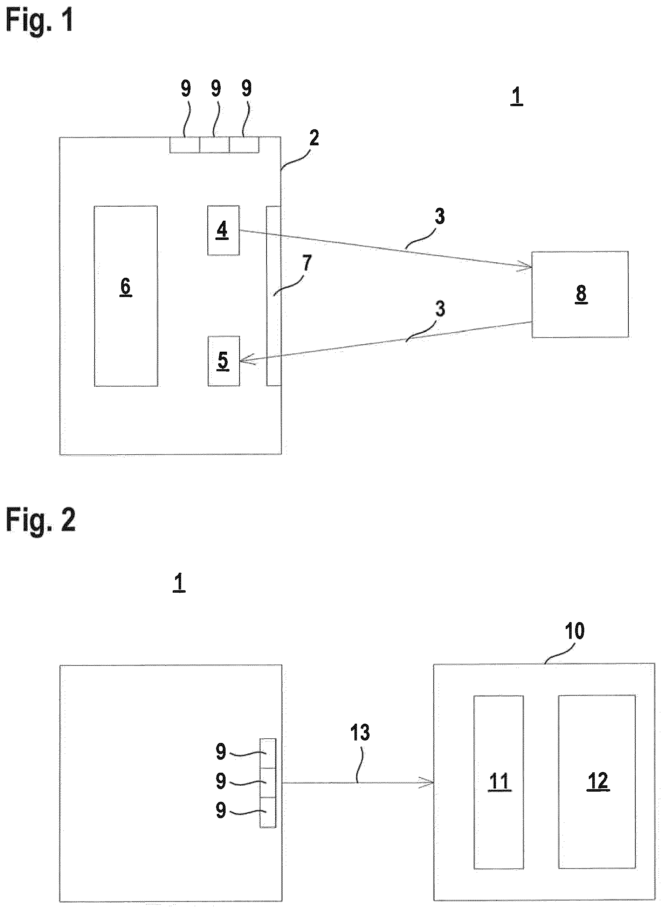

Figur 1 zeigt ein Ausführungsbeispiel eines Sensors 1, der Bestandteil der erfindungsgemäßen Sensoranordnung, wie in Figur 2 dargestellt, ist.

Der Sensor 1 ist im vorliegenden Fall als optischer Sensor 1 in Form eines Distanzsensors ausgebildet.

Die Komponenten des Sensors 1 sind in einem Gehäuse 2 integriert. Der Sensor 1 umfasst einen Lichtstrahlen 3 emittierenden Sender 4 und einen Lichtstrahlen 3 empfangenden Empfänger 5. Der Sender 4 kann von einer Laserdiode gebildet sein, der Empfänger 5 kann von einer Photodiode gebildet sein.

Zur Steuerung des Senders 4 und zur Auswertung von Empfangssignalen des Empfängers 5 ist eine Steuer- und Auswerteeinheit 6 vorgesehen. Die Steuer- und Auswerteeinheit 6 ist im einfachsten Fall von einer einzelnen Rechnereinheit gebildet. Für den Fall, dass der Sensor 1 ein Sicherheitssensor ist, weist die Steuer- und Auswerteeinheit 6 einen redundanten, fehlersicheren Aufbau auf, beispielsweise in Form zweier sich gegenseitig zyklisch überwachender Rechnereinheiten.

Die Lichtstrahlen 3 werden durch ein Fenster 7 in der Frontwand des Gehäuses 2 geführt.

Die Distanzmessung erfolgt im vorliegenden Fall nach einem Impuls-LaufzeitVerfahren. Hierzu emittiert der Sender 4 Lichtstrahlen 3 in Form von Lichtimpulsen. Zur Distanzbestimmung eines Objekts 8 wird die Laufzeit der Lichtimpulse zum Objekt und zurück zum Sensor 1 bestimmt.

Der Sensor 1 kann zu einem Flächendistanzsensor erweitert sein, in dem zusätzlich eine Ablenkeinheit vorgesehen ist, die die Lichtstrahlen 3 periodisch innerhalb eines flächigen Erfassungsbereichs führt.

Die in der Steuer- und Auswerteeinheit 6 ermittelten Distanzwerte können als Sensorsignale ausgegeben werden. Alternativ oder zusätzlich kann mit dem Sensor 1 eine Schutzfeldüberwachung durchgeführt werden. Dann wird im Sensor 1 ein Objektfeststellungssignal in Form eines binären Schaltsignals generiert, dessen Schaltzustände angeben, ob ein Objekt im Schutzfeld vorhanden ist oder nicht. Zur Ausgabe der Sensorsignale können geeignete Schnittstellen vorgesehen sein.

Wie aus Figur 1 ersichtlich weist der Sensor 1 Anzeigemittel in Form einer Leuchtdiodenanordnung auf. Die Leuchtdiodenanordnung umfasst im vorliegenden Fall drei Leuchtdioden 9. Natürlich kann die Leuchtdiodenanordnung auch eine andere Zahl von Leuchtdioden 9 aufweisen, wobei im einfachsten Fall die Anzeigemittel nur eine Leuchtdiode 9 aufweisen.

Die Leuchtdiode 9 emittieren sichtbares Licht 13 gleicher oder unterschiedlicher Farbe. Damit bilden die Leuchtdiode 9 eine für einen Benutzer sichtbare Anzeige, mit der insbesondere eine Zustandsanzeige des Sensors 1 realisiert wird. Beispielsweise können durch Aktivierung einzelner oder aller Leuchtdioden 9 Fehlermeldungen oder Warnmeldungen visuell angezeigt werden.

Figur 2 zeigt ein Ausführungsbeispiel der erfindungsgemäßen Sensoranordnung mit dem Sensor 1 gemäß Figur 1.

Dem Sensor 1 ist eine externe Einheit zugeordnet, die im vorliegenden Fall von einem Smartphone 10 gebildet ist. Das handelsübliche Smartphone 10 weist eine Kamera 11 und einen Prozessor auf. Im Prozessor ist eine App installiert, die die Auswerteeinheit 6 zur Auswertung von Ausgangssignalen der Kamera 11 bildet.

Erfindungsgemäß werden die die Anzeigemittel bildenden Leuchtdioden 9 nicht nur als visuelle Anzeigen genutzt, sondern auch zur Ausbildung einer unidirektionalen optischen Schnittstelle, über welche Informationen vom Sensor 1 zum Smartphone 10 übertragen werden können.

Hierzu wird dem sichtbaren Licht 13 der Leuchtdiode 9 über die Steuer- und Auswerteeinheit 6 eine Modulation aufgeprägt. Das modulierte Licht 13 enthält die zu übertragenden Informationen. Dieses modulierte Licht 13 wird in der Kamera 11 des Smartphones 10 empfangen. Die Modulation des Lichts 13 wird in der Auswerteeinheit 12 ausgewertet, in dem die Modulation des Lichts 13 demoduliert wird. Damit können Informationen wie zum Beispiel Sensorsignale oder auch Objektfeststellungssignale vom Sensor 1 an das Smartphone 10 oder generell die externe Einheit übermittelt werden.

Da die Leuchtdioden 9 eine mehrkanalige Überlagerungsstruktur bilden, können auch sicherheitsrelevante Informationen übertragen werden.

Die Modulationen sind dem sichtbaren Licht 13 der Leuchtdiode 9 so überlagert, dass sie für das menschliche Auge nicht sichtbar sind. Weiterhin sind die Modulationsfrequenzen an die Reaktionszeit der Kamera 11 angepasst.

### Bezugszeichenliste

- (1): Sensor
- (2): Gehäuse
- (3): Lichtstrahl
- (4): Sender
- (5): Empfänger
- (6): Steuer- und Auswerteeinheit
- (7): Fenster
- (8): Objekt
- (9): Leuchtdiode
- (10): Smartphone
- (11): Kamera
- (12): Auswerteeinheit
- (13): Licht

## Patentansprüche

1. Sensoranordnung mit einem Sensor (1), welcher zur Erfassung von Objekten (8) in einem Erfassungsbereich ausgebildet ist, wobei der Sensor (1) ein Anzeigemittel mit wenigstens einer Leuchtdiode (9) aufweist, **dadurch gekennzeichnet, dass** die Leuchtdiode (9) eine unidirektionale Schnittstelle ausbildet, in dem diese moduliertes Licht (13) aussendet, und dass eine externe Einheit mit einer Empfangseinheit und einer zugeordneten Auswerteeinheit (12) vorgesehen ist, wobei die Empfangseinheit ausgebildet ist, das modulierte Licht (13) der Leuchtdiode (9) zu empfangen und die Auswerteeinheit (12) ausgebildet ist, das mit der Kamera (11) empfangene modulierte Licht (13) auszuwerten.

2. Sensoranordnung nach Anspruch 1, **dadurch gekennzeichnet, dass** die Empfangseinheit eine Kamera (11) ist.

3. Sensoranordnung nach einem der Ansprüche 1 oder 2, **dadurch gekennzeichnet, dass** der Sensor (1) als Anzeigemittel eine Leuchtdiodenanordnung mit mehreren Leuchtdioden (9) aufweist, wobei die oder jede Leuchtdiode (9) zur Anzeige von Informationen sichtbares Licht (13) emittiert.

4. Sensoranordnung nach Anspruch 3, **dadurch gekennzeichnet, dass** dem sichtbaren Licht (13) der oder jeder Leuchtdiode (9) eine Modulation zur Informationsübertragung überlagert ist.

5. Sensoranordnung nach Anspruch 4, **dadurch gekennzeichnet, dass** die Modulation für das menschliche Auge nicht sichtbar ist, und/oder dass die Modulationsfrequenz der Modulation an die Reaktionszeit der Empfangseinheit angepasst ist.

6. Sensoranordnung nach einem der Ansprüche 1 - 5, **dadurch gekennzeichnet, dass** in der Auswerteeinheit (12) der externen Einheit eine Demodulation des in der Empfangseinheit empfangenen modulierten Lichts durchführbar ist.

7. Sensoranordnung nach einem der Ansprüche 1 - 6, **dadurch gekennzeichnet, dass** die externe Einheit von einem Smartphone (10) gebildet ist.

8. Sensoranordnung nach Anspruch 7, **dadurch gekennzeichnet, dass** die Auswerteeinheit (12) von einer im Smartphone (10) implementierten App gebildet ist.

9. Sensoranordnung nach einem der Ansprüche 1 - 8, **dadurch gekennzeichnet, dass** mittels der Anzeigemittel eine Zustandsanzeige des Sensors (1) durchführbar ist.

10. Sensoranordnung nach Anspruch 9, **dadurch gekennzeichnet, dass** mittels der Anzeigemittel Statusmeldungen des Sensors (1) anzeigbar sind.

11. Sensoranordnung nach einem der Ansprüche 1 - 10, **dadurch gekennzeichnet, dass** über die unidirektionale Schnittstelle Sensorsignale übertragbar sind.

12. Sensoranordnung nach Anspruch 11, **dadurch gekennzeichnet, dass** über die unidirektionale Schnittstelle Objektfeststellungssignale übertragbar sind.

13. Sensoranordnung nach einem der Ansprüche 1- 12, **dadurch gekennzeichnet, dass** mittels Anzeigemittel (12) in Form einer Leuchtdiodenanordnung sicherheitsrelevante Informationen über die unidirektionale Schnittstelle übertragbar sind.

14. Sensoranordnung nach einem der Ansprüche 1- 13, **dadurch gekennzeichnet, dass** der Sensor (1) ein Sicherheitssensor ist, und/oder dass der Sensor (1) ein optischer Sensor, ein Ultraschallsensor oder ein Radarsensor ist.

15. Sensoranordnung nach einem der Ansprüche 1- 14, **dadurch gekennzeichnet, dass** der Sensor (1) ein Distanzsensor, ein Codeleser, ein Lichttaster, ein Lichtvorhang, eine Lichtschranke oder eine Reflexionslichtschranke ist.
